# EUROPÄISCHE PATENTANMELDUNG

(11) **EP 4 464 494 A1**
(43) Veröffentlichungstag der Anmeldung: **20.11.2024**
(21) Anmeldenummer: 24175541.2
(22) Anmeldetag: 13.05.2024
(51) Int. Cl.: B29C 45/27, B29C 45/28, B29C 45/73

(54) **DÜSENANORDNUNG UND SPRITZGUSSVERFAHREN**

(30) Priorität: 16.05.2023 DE 102023112956
(71) Anmelder: Günther Heisskanaltechnik GmbH, 35066 Frankenberg (DE)
(72) Erfinder: Sommer, Siegrid, 35099 Burgwald (DE); Sommer, Stefan, 35099 Burgwald (DE); Schnell, Torsten, 35104 Lichtenfels (DE)
(74) Vertreter: Patentanwälte Olbricht Buchhold Keulertz

(57) **Zusammenfassung**

Die vorgestellte Erfindung betrifft eine Düsenanordnung (100) für ein Heißkanalsystem zum Verarbeiten einer fließfähigen Masse, wobei die Düsenanordnung (100) umfasst:
eine Vielzahl Düsenriegel (101), eine Anzahl thermischer Regulationselemente (103), wobei jeweilige Düsenriegel (101) der Vielzahl Düsenriegel (101) eine Vielzahl Rohre (105) zum Leiten der fließfähigen Masse durch den Düsenriegel (101) und einen Kopfbereich (107) umfassen, in dem Verteilerkanäle zum Verteilen der fließfähigen Masse auf jeweilige Rohre (105) der Vielzahl Rohre (105) ausgebildet sind, und wobei jeweilige Regulationselemente (103) der Anzahl Regulationselemente (103) mit zumindest einem Düsenriegel (101) der Vielzahl Düsenriegel (101) zum Regulieren von thermischer Energie in der Düsenanordnung (100) thermisch gekoppelt sind.

## Beschreibung

Die Erfindung betrifft eine Düsenanordnung und ein Spritzgussverfahren, insbesondere zum Herstellen von Mikrotiterplatten oder Kavitätenplatten (englisch: well plates oder microwell plates), gemäß den beigefügten Ansprüchen.

Heißkanal- oder Kaltkanalsysteme sind allgemein bekannt. Sie werden in Spritzgießwerkzeugen eingesetzt, um eine fließfähige Masse bei einer vorgebbaren Temperatur unter Druck einem trennbaren Werkzeugblock mit darin ausgebildeten Formnestern (Kavitäten) zuzuführen. Die fließfähige Masse wird über Verteilerkanäle einem oder mehreren materialführenden Rohren (Materialrohre) zugeführt, die jeweils endseitig über eine Düsenspitze, einem Düsenmundstück oder - bei Nadelverschlussdüsen - über eine Nadelführung in ein jeweils zugeordnetes Formnest münden.

Die Verteilerkanäle sind in einer oder in mehreren Verteilerplatten ausgebildet, an welchen die materialführenden Rohre angeschlossen sind. Letztere können gruppenweise zusammengefasst sein und einen Düsenriegel bilden, vorzugsweise in einem Mehrfachwerkzeug mit einer Vielzahl an Formnestern.

Damit die fließfähige Masse innerhalb der Düsen nicht vorzeitig abkühlt, ist meist eine elektrische Heizung vorgesehen, welche die materialführenden Rohre und damit das in den darin ausgebildeten Strömungskanälen geführte Material auf einer gewünschten Temperatur hält. Werden hingegen beispielsweise reaktive Polymere verarbeitet, ist es erforderlich, die Düse zu kühlen, damit die zu verarbeitende Masse beim Eintritt in die Formnester eine bestimmte Temperatur nicht übersteigt. Zur Erfassung der Temperatur verwendet man gewöhnlich einen oder mehrere Temperaturfühler.

Für die Herstellung von Produkten, die eine relativ große Anzahl an Anspritzpunkten benötigen oder aufweisen, werden mehrere Düsenriegel verwendet, die parallel nebeneinander angeordnet eine Düsenanordnung bilden, so dass die materialführenden Rohre mit geringem Abstand untereinander in einer Matrix oder in einem Raster liegen, wobei vorzugsweise jedes Materialrohr eine Kavität bedient (siehe beispielsweise EP 1 254 004 A1).

Aufgrund einer Verteilung von thermischer Energie zwischen jeweiligen Rohren kann es zu Situationen kommen, in denen durch Rohre im Zentrum einer Düsenanordnung geleitete fließfähige Masse wärmer ist als durch Rohre am Rand der Düsenanordnung geleitete fließfähige Masse. Durch derart heterogene Wärmeverteilung können im Produkt Schäden aufgrund von thermischem Verzug entstehen.

Ferner können Rohre im Zentrum einer Düsenanordnung stärker thermisch belastet sein als Rohre am Rand der Düsenanordnung, so dass die Rohre im Zentrum stärkerem thermischem Verzug ausgesetzt sind als Rohre am Rand der Düsenanordnung. Dadurch kann sich eine geometrische Ausrichtung der verschiedenen Rohre untereinander unterscheiden, was ebenfalls Problemen im Werkzeug sowie zu Schäden im Produkt führen kann.

Vor diesem Hintergrund ist es eine Aufgabe der vorgestellten Erfindung eine Möglichkeit zum gleichmäßigen Gießen eines großen Produkts bereitzustellen, insbesondere einer Mikrotiterplatte mit 48, 96 oder mehr Kavitäten (englisch: wells), wie sie beispielsweise im Laborbetrieb typisch ist.

Es wird somit gemäß einem ersten Aspekt der vorgestellten Erfindung eine Düsenanordnung für ein Heißkanalsystem zum Verarbeiten einer fließfähigen Masse vorgestellt.

Dabei sieht die Erfindung vor, dass eine Düsenanordnung eine Vielzahl Düsenriegel und eine Anzahl thermischer Regulationselemente umfasst, wobei jeweilige Düsenriegel der Vielzahl

Düsenriegel eine Vielzahl Rohre zum Leiten der fließfähigen Masse durch den Düsenriegel und einen Kopfbereich umfassen, in dem Verteilerkanäle zum Verteilen der fließfähigen Masse auf jeweilige Rohre der Vielzahl Rohre ausgebildet sind, wobei jeweilige Regulationselemente der Anzahl Regulationselemente mit zumindest einem Düsenriegel der Vielzahl Düsenriegel zum Regulieren von thermischer Energie in der Düsenanordnung thermisch gekoppelt sind.

Unter einem materialführenden Rohr bzw. einem Rohr ist im Kontext der vorgestellten Erfindung eine Materialanordnung zu verstehen, in der eine Ausnehmung bzw. ein Kanal ausgebildet ist, so dass fließfähige Masse durch das Rohr ggf. über eine mit dem Rohr verbundene Düse, in ein Werkzeug geleitet werden kann. Der vorgestellte Düsenriegel kann als monolithischer Block jeweilige Rohre ausbilden oder Aufnahmen bereitstellen, in die ein jeweiliges Rohr, bspw. eingeschraubt oder eingeklebt oder eingepresst ist.

Insbesondere sind die Rohre der vorgestellten Düsenanordnung als Materialvorsprünge aus einem Grundkörper ausgestaltet, so dass die Rohre über den Grundkörper, der bspw. den Kopfbereich eines Düsenriegels umfassen bzw. bilden kann, verbunden. Entsprechend kann ein Düsenriegel ein Raster an Rohren ausbilden, die zumindest bereichsweise voneinander beabstandet sind.

Die vorgestellte Erfindung basiert auf dem Prinzip, dass ein thermischer Fluss bzw. eine Verteilung von thermischer Energie in der vorgestellten Düsenanordnung mittels mindestens einem Regulationselement eingestellt bzw. kontrolliert wird. Entsprechend bewirkt die erfindungsgemäß vorgesehene Anzahl Regulationselemente eine Homogenisierung eines thermischen Flusses bzw. eine homogene Verteilung von thermischer Energie in der vorgestellten Düsenanordnung, so dass ein Temperaturunterschied zwischen jeweiligen Rohren der Düsenanordnung minimiert wird.

Es kann vorgesehen sein, dass jeweilige Regulationselemente der Anzahl Regulationselemente derart an jeweiligen Düsenriegeln der Vielzahl Düsenriegel angeordnet sind, dass ein Temperaturverlauf in der Düsenanordnung im Betrieb homogenisiert wird.

Zum Homogenisieren eines Temperaturverlaufs in der Düsenanordnung im Betrieb kann eine Position und/oder eine Masse und/oder eine Form und/oder ein Material eines jeweiligen Regulationselements derart gewählt werden, dass Temperaturunterschiede zwischen jeweiligen Rohren der vorgestellten Düsenanordnung minimiert werden. Dazu können jeweilige Regulationselemente bspw. an Orten angeordnet sein, an denen eine Temperatur über einer mittleren Temperatur der Düsenanordnung oder über einem vorgegebenen Schwellenwert liegt.

Alternativ können jeweilige Regulationselemente bspw. an Orten angeordnet sein, an denen eine Temperatur unter einer mittleren Temperatur der Düsenanordnung oder unter einem vorgegebenen Schwellenwert liegt.

Es kann vorgesehen sein, dass die Anzahl Regulationselemente Kühlelemente, die zum Ableiten von thermischer Energie aus der Düsenanordnung konfiguriert sind und/oder Isolationselemente, die zum Halten von thermischer Energie in der Düsenanordnung konfiguriert sind, umfasst.

Kühlelemente können bspw. aus Stahl bzw. einer Stahllegierung bestehen und/oder eine besonders große Oberfläche, bspw. in Form von Kühlrippen, aufweisen.

Isolationselemente können bspw. aus Titan bzw. einer Titanlegierung oder einem Schaum bzw. einem Kunststoff bestehen. Ferner ist vorgesehen, dass die Isolationselemente eine interne Rippen- oder Stegstruktur aufweisen, wobei zwischen den Rippen und/oder Stegen Isolationsbereiche ausgebildet sind.

Es kann weiterhin vorgesehen sein, dass die Anzahl Regulationselemente weiterhin dazu konfiguriert sind, die Düsenanordnung an einem Stützkörper abzustützen.

Durch Verwendung von Regulationselementen zur Abstützung der Düsenanordnung an einem Stützkörper, wie bspw. einer Werkzeugplatte, kommt den Regulationselementen eine Doppelfunktion zu, so dass auf zusätzliche Abstützelemente verzichtet und die Düsenanordnung besonders kompakt ausgestaltet werden kann.

Es kann weiterhin vorgesehen sein, dass ein jeweiliges Regulationselement der Anzahl Regulationselemente an einer Kontaktstelle mit einem Düsenriegel thermisch gekoppelt ist, deren Oberflächentemperatur im Betrieb über oder unter einer vorgegebenen Schwellentemperatur liegt.

Zum thermischen Koppeln eines Regulationselements mit einem Düsenriegel kann das Regulationselement bspw. mittels eines thermischen Klebers, bspw. einem thermisch leitfähigen Epoxidkleber formschlüssig verbunden werden.

Es kann weiterhin vorgesehen sein, dass jeweilige Düsenriegel der Vielzahl Düsenriegel eine Vielzahl Düsen, einen Kopfbereich, in dem Verteilerkanäle zum Verteilen von fließfähiger Masse auf jeweilige Düsen der Vielzahl Düsen ausgebildet sind und eine Vielzahl Düsennadeln zum Steuern eines Flusses der fließfähigen Masse durch jeweilige Düsen der Vielzahl Düsen umfassen, wobei in jedem Düsenriegel der Vielzahl Düsenriegel eine Anzahl Temperierungskanäle ausgebildet ist, deren Verlauf sich zwischen jeweiligen Düsen der Vielzahl Düsen unterscheidet.

Unter einem Temperierungskanal ist im Kontext der vorgestellten Erfindung eine Ausnehmung bzw. eine Aufnahme zum Aufnehmen eines Temperierungselements, wie bspw. einem Heizdraht oder einer Kühlmittelleitung zum Temperieren, d.h. zum Heizen oder Kühlen eines Düsenriegels, zu verstehen. Ein Temperierungskanal kann bspw. eine Heiznut sein und in einen Grundkörper eines Düsenriegels eingebracht, insbesondere eingefräst oder konstruktiv, bspw. in einem Plan zum 3D-Druck vorgesehen sein.

Ein Temperierungskanal, dessen Verlauf sich zwischen jeweiligen Rohren der Vielzahl Rohre unterscheidet, bedingt eine unterschiedliche Übertragung von thermischer Energie auf unterschiedliche Rohre. Dies bedeutet, dass ein jeweiliger Temperierungskanal einen spezifischen Eintrag von thermischer Energie in ein jeweiliges Rohr bedingt, so dass bspw. ein Temperaturverlauf in dem Düsenriegel homogenisiert wird und ein besonders gleichmäßiger Fluss von fließfähiger Masse durch die Rohre erreicht wird.

Es kann weiterhin vorgesehen sein, dass an jedem Düsenriegel mindestens ein Regulationselement angeordnet ist.

Durch mindestens ein Regulationselement an jedem Düsenriegel kann ein für einen jeweiligen Düsenriegel spezifisches Regulationselement vorgesehen sein, dass die Menge an thermischer Energie abführt bzw. einbringt, um das der jeweilige Düsenriegel sich von einem Sollwert, wie bspw. einer durchschnittlichen Temperatur der Düsenanordnung unterscheidet.

Ferner können an jeweiligen Düsenriegeln vorgesehene Regulationselemente zur thermischen Kopplung der Düsenriegel untereinander verwendet werden. Dazu können jeweilige Regulationselemente bspw. als flächige, insbesondere scheibenförmige Elemente ausgestaltet sein, die zwischen zwei Düsenriegel eingebracht sind bzw. einbringbar sind.

Es kann vorgesehen sein, dass an verschiedenen Düsenriegeln angeordnete Regulationselemente sich in ihren thermischen Eigenschaften voneinander unterscheiden.

Verschiedene Regulationselemente mit verschiedenen thermischen Eigenschaften, wie bspw. Regulationselemente mit einer großen Wärmeleitfähigkeit und Regulationselemente mit einer geringen Wärmeleitfähigkeit können zum Halten von thermischer Energie in der Düsenanordnung an kalten Bereichen und zum Abführen von thermischer Energie an heißen Bereichen verwendet werden.

Es kann weiterhin vorgesehen sein, dass jeweilige Regulationselemente der Anzahl Regulationselemente an jeweiligen endseitig angeordneten Düsenriegeln angeordnet sind.

Durch endseitig angeordnete Regulationselemente kann ein Einfluss einer Umgebung auf eine Temperatur der Düsenanordnung minimiert bzw. kompensiert werden.

Es kann vorgesehen sein, dass jeweilige Regulationselemente der Anzahl Regulationselemente an einer kurzen Seite und/oder einer langen Seite eines jeweiligen Düsenriegels angeordnet sind.

Insbesondere durch thermisch isolierend wirkende Regulationselemente an einer langen Seite eines jeweiligen Düsenriegels kann ein Einfluss einer Umgebung gegenüber einer kurzen Seite kompensiert werden, so dass auf der langen Seite und der kurzen Seite des Düsenriegels eine vergleichbare Abwärme entsteht.

Es kann weiterhin vorgesehen sein, dass ein Abstand zwischen durch jeweilige Rohre vorgegebenen Anspritzpunkten 9 Millimeter beträgt.

Ein Abstand von 9 Millimetern zwischen jeweiligen Anspritzpunkten bzw. Austrittspunkten von fließfähiger Masse aus der Düsenanordnung, ermöglicht ein Gießen einer für den medizinischen Gebrauch gemäß gängigem Laborstandard geeigneten Wellplatten, die durch bekannte Laborroboter verwendet werden können.

Es kann weiterhin vorgesehen sein, dass der Abstand in 2 Raumrichtungen zwischen durch jeweilige Rohre vorgegebenen Anspritzpunkten 9 Millimeter beträgt.

Ein Abstand von 9 Millimetern in 2 Raumrichtungen zwischen jeweiligen Anspritzpunkten ermöglicht ein Gießen einer für den medizinischen Gebrauch gemäß gängigem Laborstandard geeigneten 96-Wellplatte, die bspw. durch bekannte Laborroboter verwendet werden kann.

Es kann weiterhin vorgesehen sein, dass jeweilige Rohre unter ihrem Kopfbereich eine Matrix bilden.

Eine Matrix bzw. ein Raster mit gleichmäßigen Abständen zwischen jeweiligen Rohren ermöglicht ein Gießen einer Wellplatte, insbesondere einer 96-Wellplatte in einem sogenannten "one-shot" Verfahren.

Es kann weiterhin vorgesehen sein, dass die Matrix 8 paarige Rohre umfasst.

8 paarige Rohre, d.h. 16 Rohre pro Düsenriegel ermöglichen ein Zusammenfügen von 6 Düsenriegeln zu einer Düsenanordnung, um eine 96-Wellplatte zu gießen.

Es kann weiterhin vorgesehen sein, dass ein jeweiliger Düsenriegel mehrere Rohre umfasst, die durch in Längs- und/oder Querrichtung zwischen den Rohren verlaufenden Ausnehmungen voneinander beabstandet sind, wobei in zumindest einem Teil der in Längs- und/oder Querrichtung zwischen den Rohren verlaufenden Ausnehmungen ein weiteres Temperierungselement angeordnet ist, vorzugsweise ein platten- oder streifenförmiges Element, das eine Dickschichtheizung bildet oder trägt.

Es kann weiterhin vorgesehen sein, dass die Düsenanordnung durch ein Zerspanungsverfahren oder ein 3D-Druck Verfahren hergestellt ist.

Ein 3D-Druck Verfahren, insbesondere ein 3D-Druck Verfahren mit einem zumindest teilweise metallischen Substrat, ermöglicht eine präzise Fertigung der vorgestellten Düsenanordnung.

Mittels eines Zerspanungsverfahrens kann die Düsenanordnung bspw. monolithisch gefertigt werden.

Es kann weiterhin vorgesehen sein, dass die Düsenanordnung eine Anzahl Düsennadeln zum Steuern eines Volumenstroms der fließfähigen Masse durch die Düsenanordnung umfasst.

Düsennadeln ermöglich ein präzises Steuern eines Stroms von fließfähiger Masse durch jeweilige Rohre der Düsenanordnung.

Es kann weiterhin vorgesehen sein, dass die Düsenanordnung 6 Düsenriegel umfasst, die jeweils 8 Rohre umfassen.

8 paarige Rohre, d.h. 16 Rohre pro Düsenriegel ermöglichen bei einem Zusammenschluss von 6 Düsenriegeln das Gießen einer 96-Wellplatte in einem "one-shot" Verfahren.

Gemäß einem zweiten Aspekt betrifft die vorgestellte Erfindung ein Spritzgussverfahren zum Herstellen eines Produkts, wobei das Spritzgussverfahren das Gießen des Produkts mittels einer möglichen Ausgestaltung der vorgestellten Düsenanordnung umfasst und wobei das Produkt in einem one-shot Verfahren gegossen wird.

Das mittels des vorgestellten Herstellungsverfahrens hergestellte Produkt kann insbesondere ein großes bzw. großflächiges Produkt sein.

Es kann vorgesehen sein, dass das Produkt eine Wellplatte, insbesondere eine 96-Wellplatte ist.

Eine Wellplatte kann bspw. ein Streifen bzw. eine Einheit sein, von denen eine Vielzahl zu einer größeren Wellplatte, wie bspw. einer 96-Wellplatte zusammengefügt werden können.

Alternativ zu einem Streifen bzw. einer Einheit, kann eine große Wellplatte, wie bspw. eine 96-Wellplatte, komplett in einem Stück hergestellt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Es zeigt:

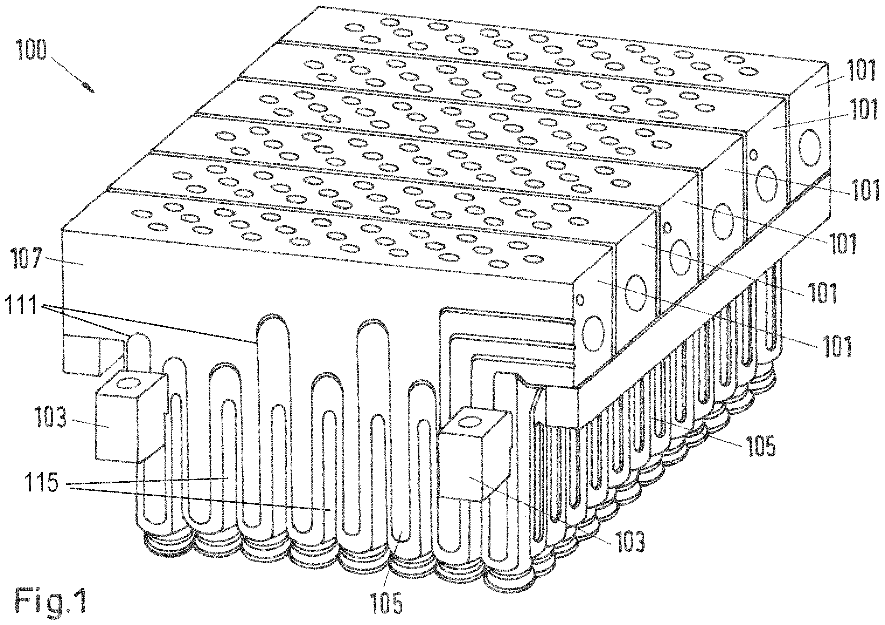

Fig. 1 eine mögliche Ausgestaltung der vorgestellten Düsenanordnung.

In Fig. 1 ist eine Düsenanordnung 100 für ein Heißkanalsystem zum Verarbeiten einer fließfähigen Masse dargestellt.

Die Düsenanordnung 100 umfasst mehrere Düsenriegel 101, die mit einer Vielzahl materialführender Rohre 105 zum Leiten der fließfähigen Masse durch die Düsenriegel 101 versehen sind. Die Rohre 105 sind innerhalb eines Düsenriegels 101 jeweils in einer Matrix oder einem Raster parallel nebeneinander und mit Abstand angeordnet. In einem Kopfbereich 107 des Düsenriegels 101 sind die Rohre 105 miteinander verbunden. Mit dem Kopfbereich 107 wird der Düsenriegel 101 an eine (nicht dargestellte) Verteilerplatte angeschlossen, wobei in der Verteilerplatte (nicht gezeigte) Verteilerkanäle ausgebildet sind zum Verteilen der fließfähigen Masse auf die jeweiligen Rohre 105 der Vielzahl Rohre 105.

In jedem Düsenriegel 101 sind (nicht näher bezeichnete) Temperierungskanäle zum Aufnehmen eines Temperierungselements 111 zum Temperieren des Düsenriegels 100, wie bspw. einem Heizdraht, ausgebildet.

Ferner umfasst der Düsenriegel 101 einen optionalen Messfühler zum Messen einer Temperatur des Düsenriegels 101.

Die Düsenanordnung 100 umfasst eine Vielzahl Düsenriegel 101 und eine Anzahl thermischer Regulationselemente 103.

Jeweilige Düsenriegel 101 umfassen eine Vielzahl Rohre 105 zum Leiten der fließfähigen Masse durch den Düsenriegel 101 und einen Kopfbereich 107, in welchem Verteilerkanäle zum Verteilen der fließfähigen Masse auf jeweilige Rohre 105 ausgebildet sind.

Die Regulationselemente 103 sind mit einem der Düsenriegel 101 zum Regulieren von thermischer Energie in der Düsenanordnung 100 thermisch gekoppelt. Entsprechend kann durch die Regulationselemente 103 thermische Energie aus der Düsenanordnung 100 abgeführt werden, indem die Regulationselemente 103 besonders gut wärmeleitend, bspw. aus Stahl gefertigt sind.

Alternativ kann durch die Regulationselemente 103 thermische Energie in der Düsenanordnung 100 gehalten werden, indem die Regulationselemente 103 besonders schlecht wärmeleitend, bspw. aus Titan gefertigt sind.

Ferner sind in Fig. 1 weitere Temperierungselemente 115 zu erkennen, die in jeweiligen in Längs- und Querrichtung zwischen den Rohren 101 verlaufenden Ausnehmungen 115 angeordnet sind. Die weiteren Temperierungselemente 117 umfassen optionale Dickschichtheizungen.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Düsenanordnung
- 101: Düsenriegel
- 103: Regulationselement
- 105: Rohr
- 107: Kopfbereich
- 109: Ausnehmung
- 111: Temperierungselement

## Patentansprüche

1. Düsenanordnung (100) für ein Heißkanalsystem zum Verarbeiten einer fließfähigen Masse, wobei die Düsenanordnung (100) umfasst:
a) eine Vielzahl Düsenriegel (101),
b) eine Anzahl thermischer Regulationselemente (103),
c) wobei jeweilige Düsenriegel (101) der Vielzahl Düsenriegel (101) eine Vielzahl Rohre (105) zum Leiten der fließfähigen Masse durch den Düsenriegel (101) und einen Kopfbereich (107) umfassen, in dem Verteilerkanäle zum Verteilen der fließfähigen Masse auf jeweilige Rohre (105) der Vielzahl Rohre (105) ausgebildet sind, und
d) wobei jeweilige Regulationselemente (103) der Anzahl Regulationselemente (103) mit zumindest einem Düsenriegel (101) der Vielzahl Düsenriegel (101) zum Regulieren von thermischer Energie in der Düsenanordnung (100) thermisch gekoppelt sind.

2. Düsenanordnung (100) nach Anspruch 1, **dadurch gekennzeichnet, dass** jeweilige Regulationselemente (103) der Anzahl Regulationselemente (103) derart an jeweiligen Düsenriegeln (101) der Vielzahl Düsenriegel (101) angeordnet sind, dass ein Temperaturverlauf in der Düsenanordnung (100) im Betrieb homogenisiert wird.

3. Düsenanordnung (100) nach Anspruch 1 oder 2, **dadurch gekennzeichnet, dass** die Anzahl Regulationselemente (103) Kühlelemente, die zum Ableiten von thermischer Energie aus der Düsenanordnung (100) konfiguriert sind und/oder Isolationselemente, die zum Halten von thermischer Energie in der Düsenanordnung (100) konfiguriert sind, umfasst.

4. Düsenanordnung (100) nach Anspruch 3, **dadurch gekennzeichnet, dass** ein Kühlelement eine Anzahl Kühlrippen umfasst.

5. Düsenanordnung (100) nach Anspruch 3, **dadurch gekennzeichnet, dass** ein jeweiliges Regulationselement (103) der Anzahl Regulationselemente (103) aus Stahl oder Titan gefertigt ist.

6. Düsenanordnung (100) nach einem der voranstehenden Ansprüche, **dadurch gekennzeichnet, dass** die Anzahl Regulationselemente (103) weiterhin dazu konfiguriert sind, die Düsenanordnung (100) an einem Stützkörper abzustützen.

7. Düsenanordnung (100) nach einem der voranstehenden Ansprüche, **dadurch gekennzeichnet, dass** ein jeweiliges Regulationselement (103) der Anzahl Regulationselemente (103) an einer Kontaktstelle mit einem Düsenriegel (101) thermisch gekoppelt ist, deren Oberflächentemperatur im Betrieb über einer vorgegebenen Schwellentemperatur liegt, oder dass ein jeweiliges Regulationselement (103) der Anzahl Regulationselemente (103) an einer Kontaktstelle mit der Düsenanordnung (100) thermisch gekoppelt ist, deren Oberflächentemperatur im Betrieb unter einer vorgegebenen Schwellentemperatur liegt.

8. Düsenanordnung (100) nach einem der voranstehenden Ansprüche, **dadurch gekennzeichnet, dass** jeweilige Düsenriegel der Vielzahl Düsenriegel (101) umfassen:
a) eine Vielzahl Rohre (105),
b) einen Kopfbereich (107), in dem Verteilerkanäle zum Verteilen von fließfähiger Masse auf jeweilige Rohre (105) der Vielzahl Rohre (105) ausgebildet sind,
c) eine Vielzahl Düsennadeln zum Steuern eines Flusses der fließfähigen Masse durch an jeweiligen Rohren (105) angeordnete Düsen,
wobei in jedem Düsenriegel (101) der Vielzahl Düsenriegel (101) eine Anzahl Temperierungskanäle ausgebildet ist, deren Verlauf sich zwischen jeweiligen Rohren (105) der Vielzahl Rohre (105) unterscheidet.

9. Düsenanordnung (100) nach einem der voranstehenden Ansprüche, **dadurch gekennzeichnet, dass** an jedem Düsenriegel (101) mindestens ein Regulationselement (103) angeordnet ist, wobei an verschiedenen Düsenriegeln (101) angeordnete Regulationselemente (103) sich in ihren thermischen Eigenschaften voneinander unterscheiden.

10. Düsenanordnung (100) nach einem der voranstehenden Ansprüche, **dadurch gekennzeichnet, dass** jeweilige Regulationselemente (103) der Anzahl Regulationselemente (103) an jeweiligen endseitig angeordneten Düsenriegeln (101) angeordnet sind.

11. Düsenanordnung (100) nach einem der voranstehenden Ansprüche, **dadurch gekennzeichnet, dass** die Düsenanordnung (100) eine Anzahl Düsennadeln zum Steuern eines Volumenstroms der fließfähigen Masse durch die Düsenanordnung (100) umfasst.

12. Düsenanordnung (100) nach einem der voranstehenden Ansprüche, **dadurch gekennzeichnet, dass** ein jeweiliger Düsenriegel mehrere Rohre umfasst, die durch in Längs- und/oder Querrichtung zwischen den Rohren verlaufenden Ausnehmungen (115) voneinander beabstandet sind, wobei in zumindest einem Teil der in Längs- und/oder Querrichtung zwischen den Rohren verlaufenden Ausnehmungen (115) ein Temperierungselement angeordnet ist, wobei das Temperierungselement vorzugsweise eine Dickschichtheizung ist oder trägt.

13. Spritzgussverfahren zum Herstellen eines Produkts, wobei das Spritzgussverfahren umfasst:
▪ gießen des Produkts mittels einer Düsenanordnung (100) nach einem der Ansprüche 1 bis 12, wobei das Produkt in einem one-shot Verfahren gegossen wird.

14. Spritzgussverfahren nach Anspruch 14, **dadurch gekennzeichnet, dass** das Produkt eine Mikrotiterplatte oder Kavitätenplatte ist (englisch: well plate oder microwell plate) mit insbesondere 96 Kavitäten (englisch: wells).
